Europäisches Patentamt

European Patent Office

Office européen des brevets

(11) Publication number: 0 368 309 A2

# EUROPEAN PATENT APPLICATION

(21) Application number: 89120787.0

(22) Date of filing: 09.11.89

(51) Int. Cl.⁵: G02B 27/00, B23K 26/00

(30) Priority: 10.11.88 YU 2089/88

(43) Date of publication of application:
16.05.90 Bulletin 90/20

(84) Designated Contracting States:
AT DE FR IT NL

(71) Applicant: INSTITUT " JOSEF STEFAN" P.O.,
LJUBLJANA
Jamova 39
YU-61000 Ljubljana(YU)

(72) Inventor: Kopac, Samo
Polica 3
YU-64000 Kranj(YU)
Inventor: Pirs, Janez, Dr.
Brilejeva 22
YU-61000 Ljubljana(YU)
Inventor: Musevic, Igor, Dipl. Ing.
Svabiceva 1
YU-61000 Ljubljana(YU)
Inventor: Marin, Bojan ,Dipl.Ing.
Kardeljeva 10
YU-61000 Ljubljana(YU)
Inventor: Copic, Martin, Dr.
Pletersnikova 15
YU-61000 Ljubljana(YU)
Inventor: Zgonik, Marko
Mestni trg 19
YU-61000 Ljubljana(YU)
Inventor: Mihailovic, Dragan, Dr.
Postojnska 25
YU-61000 Ljubljana(YU)

(74) Representative: Lehn, Werner, Dipl.-Ing. et al
Hoffmann, Eitle & Partner Patentanwälte
Arabellastrasse 4
D-8000 München 81(DE)

(54) Raster ruling apparatus.

(57) In the raster ruling apparatus of the invention on a common optical axis(A),which is bent in a prism-(P), a continuously pumped laser(41), a pulsed laser-(1), a beam expanding and attenuating optical system (2) for expanding beams of the lasers(41, 1) and for attenuating the beam of the pulsed laser(1),a beam splitter(42) for splitting the beam of the laser-(41) which beam is reflected by the surface of a workpiece(5), and an optical system (3) for shaping the laser beams are lined up one after the other. A spherical zoom lens (32)of the optical system(3) focuses the light beams of the lasers (1, 41) to the surface of the workpiece(5), which is fastened to the carriage(61), whereas a cylindrical lens (31) of this system(3)shapes the raster marking lines together with the lens(32) .

The displacement of the carriage(61) is measured by a displacement measuring interferometer-(7),whose output is connected to the microcomputer-(8)triggering the laser(1) when the workpiece(5)is in programmed positions. A control circuit(4)controls a focusing mechanism(46)and checks the appearance of a raster marking line.

The apparatus of the invention rules long scale rasters with a high accuracy without using a previously made master mask.

Fig.1

# RASTER RULING APPARATUS

The invention concerns an apparatus ruling rasters, e.g. a scale raster consisting of marking lines of a desired width and length, which lines are arranged with predetermined interspaces, into a thin material layer deposited on a plane substrate or into the surface layer of a plane substrate, below called workpiece. The apparatus of the invention makes possible to rule the marking lines of an adjustable and controlled width and length and of a high absolute accuracy of marking lines interspaces (to about 0.5 $\mu$m/m) with a high rate of ruling these marking lines (about 1 cm of the scale raster per second). The apparatus operation is based on a local melting and evaporating of a thin material layer on the workpiece surface when irradiating it with a laser light of an appropriate wavelength and of a high light intensity. The dimensions, i.e. the width and the length, of the area from which material is removed are simply controllable, and the interspaces between the marking lines are programmable. The apparatus of the invention is especially destined to rule long scale rasters (length about 1 m) on various substrates.

There are known several methods and apparatuses for ruling rasters, based either on photolithography or on treating the material with a laser light.

Technical solutions representative for the photolithographic process are described in GB 2 072 850 B and EP 0 021 095 A1.

The patent GB 2 072 850 B deals with ruling a scale raster photolithographically into a highly reflecting material deposited on a flat substrate. With the proposed method a high production accuracy of the dimensions of ruled raster marking lines is advan tageously accomplished. It is a drawback, however, that in order to rule the scale raster on a substrate first an original photomask with the required raster must be produced and afterwards the marking lines raster must be imaged on the substrate by contact imaging. Before the contact imaging an auxiliary photosensitive layer of a constant thickness and being possibly free of defects has to be formed on the substrate, which is not simply feasible with large substrates. Then the photosensitive layer has to be evenly illuminated, developed, etched and removed, all of these procedures increasing the time to produce the scale raster, the necessary technical equipment and the probability that there occurs a raster defect. Owing to different temperature expansions of the photomask and of the substrate, their homogenous and well defined temperature has to be provided during the contact imaging. The proposed method is a two-step method comprising, firstly, the production of the original raster on the original photomask and, secondly, the contact imaging of the scale raster. Therefore the number of defects is increased and the dimension accuracy of the raster marking lines is impaired.

Similar disadvantages are met at the technical solution according to the patent application EP 0 021 095 A1, which, however, has several advantages with respect to the patent GB 2 072 850 B, especially because of a shorter photolithographic process. A scale raster is directly ruled into a photosensitive layer with an image generator. It is well known, however, that such a method of ruling the marking lines rasters is applied only for ruling master rasters, which are then used for the contact imaging itself onto a substrate. As a disadvantage of the proposed method may be considered that first the photosensitive layer must be deposited on the substrate and then chemically treated by a wet plate process. Further, relatively low capacities of the image generators are not appropriate for a direct treatment of the substrates, even though the required quality of the scale raster is afforded.

Technical solutions representative for the process of material treating with a laser light are described in CA 1 218 708, US 4 490 211 and GB 2 114 063 B.

In the patent CA 1 218 708 there are disclosed a high speed laser scanning equipment for thermal treatment of a ferromagnetic material and a process for applying this equipment. In the equipment a cylindrical lens is mounted solving the problem of transforming the circular beam cross-section of the entering laser beam into an elongated beam cross-section in the focal plane of the cylindrical lens; therefore the rate of thermal treatment of the surface is increased. An advantage of this technical solution is that the energy of the entering beam is wholly exploited by imaging the entering laser beam into a line on the material surface. However, no control of the width and the length of the raster lines is provided. Moreover, the layout and the construction of the system for adjusting the distance from the cylindrical lens to the material surface cannot afford the accuracy required by the problem of the proposed invention.

In the patent US 4 490 211 a method of ruling marking lines and rasters by a laser induced chemical etching of a metal surface is described. This is a one-step method; there is no need to deposit any auxiliary photosensitive layer since the etching is accomplished directly when imaging a master scale raster made on a common photomask. However, the master raster on the original photomask has to be made first and thereupon this master raster is imaged onto the substrate surface. This method is not appropriate for ruling scale rasters on rather large substrates because of hard working conditions since the etching is performed in an athmosphere of a selected gas.

In the patent GB 2 114 063 B an apparatus for a laser marking of metal products by alpha-numeric characters is disclosed. During the marking the product moves in a controlled manner in a direction perpendicular to the laser beam. For focusing the beam there is provided a lens in a self-focusing system. The beam movement on the product when the marking is performed is provided by two mirrors tilting in mutually perpendicular directions. The alpha-numeric characters are marked by this mirror tilting which is controlled by a microcomputer. It is a drawback of such a configuration that it does not make possible the measurement of the absolute displacement of the workpiece with an accuracy as required by the problem of the invention. Furthermore, in the described apparatus it is not possible to vary the beam section dimensions in the focal plane of the lens and thereby the dimensions of the ruled raster. The controlled movement of the product, which even stops during the marking process, and the reproduction of the characters by overlapping dots slow down the marking process.

The problem of the invention exists in constructing an apparatus for ruling a raster, which raster consists of marking lines of a simply controllable width and length as well as position, into a workpiece surface or into a thin material layer on a flat substrate whereat it is desired that the marking line width should be adjustable within an interval of 2 $\mu$m to 50 $\mu$m with a tolerance of $\pm$ 5% and that the marking line length should be within an interval of 0.5 mm to 10 mm and that the apparatus will be ready for ruling a great number of marking lines, e.g. $10^5$, at a rate of about $10^3$ marking lines per second, the arbitrary selected interspaces of these marking lines being realized with an absolute accuracy of $\pm 0.5$ $\mu$m up to distances of about 1000 mm measured at the substrate temperature of 20 $^\circ$C $\pm$ 0.1 $^\circ$C.

With the foregoing deficiencies in view, the raster ruling apparatus in accordance with the invention is characterized by features of the claims.

Scale rasters ruled by the apparatus of the invention have a high resolution with its lower limit being determined by the wavelength of the pulsed laser light.

An advantage of the proposed apparatus exists above all in that the width and the length of the raster marking lines are adjustable in a simple way using the whole energy of the laser pulse and that no previously made original photomask is needed.

A further advantage of the apparatus of the invention exists in that the position of each raster marking line is determined independently of positions of other marking lines and simultaneously, without any need to stop the apparatus carriage each time, which makes possible a high rate of producing scale rasters of a great length.

The apparatus of the invention is advantageously compact and its working conditions are therefore well defined.

A specific embodiment of the invention will be presented in the following detailed description in conjunction with the accompanying drawings.

In the drawings,

Fig. 1 is an arrangement of the apparatus of the invention,

Figs. 2a, b represent a ray trajectory in a cylindrical and a spherical zoom lens in two mutually perpendicular optical axis sections.

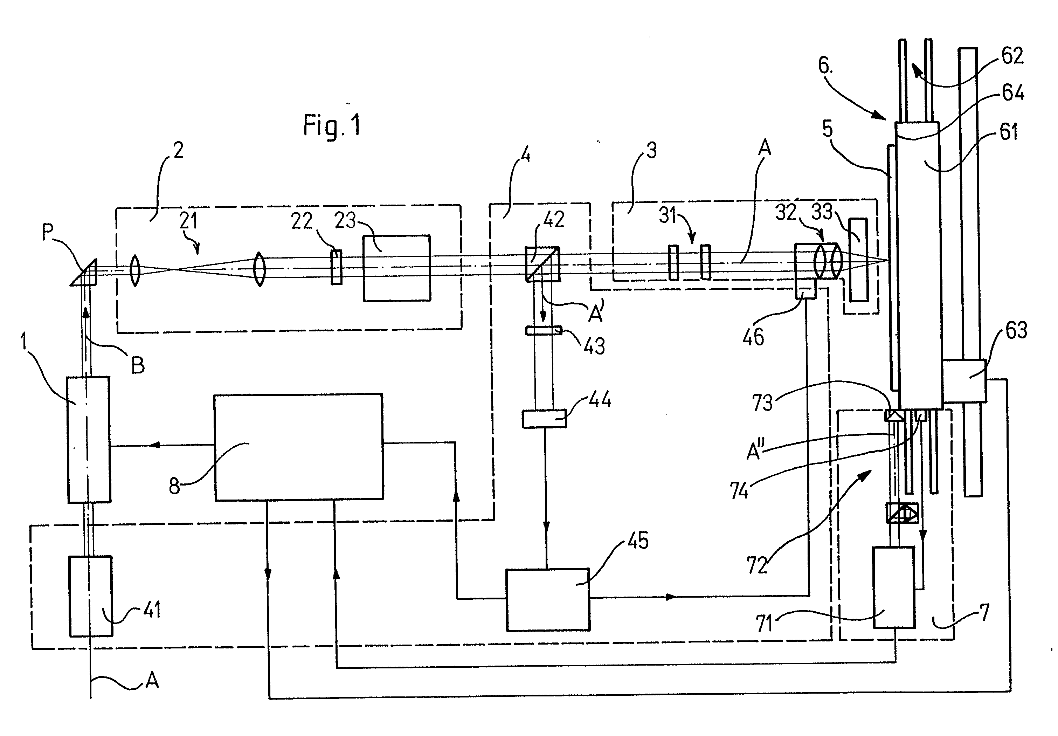

On a common optical axis A, which is bent in a prism P (Fig. 1), a continuously pumped laser 41, e.g. a He-Ne laser, a pulsed laser 1, e.g. Nd-YAG laser, a beam expanding and attenuating optical system 2 for expanding the beams of the lasers 41, 1 and for attenuating the beam of the pulsed laser 1, a beam splitter 42 for splitting the beam of the laser 41 and an optical system 3 for shaping the laser beams are lined up one after the other.

The beam expanding and attenuating optical system 2 consists of a telescope 21, of a rough absorbing filter 22 and of an adjustable attenuator 23, which are lined up on the common optical axis A one after the other. By the filter 22 and by the attenuator 23 the light beam of the pulsed laser 1 is attenuated.

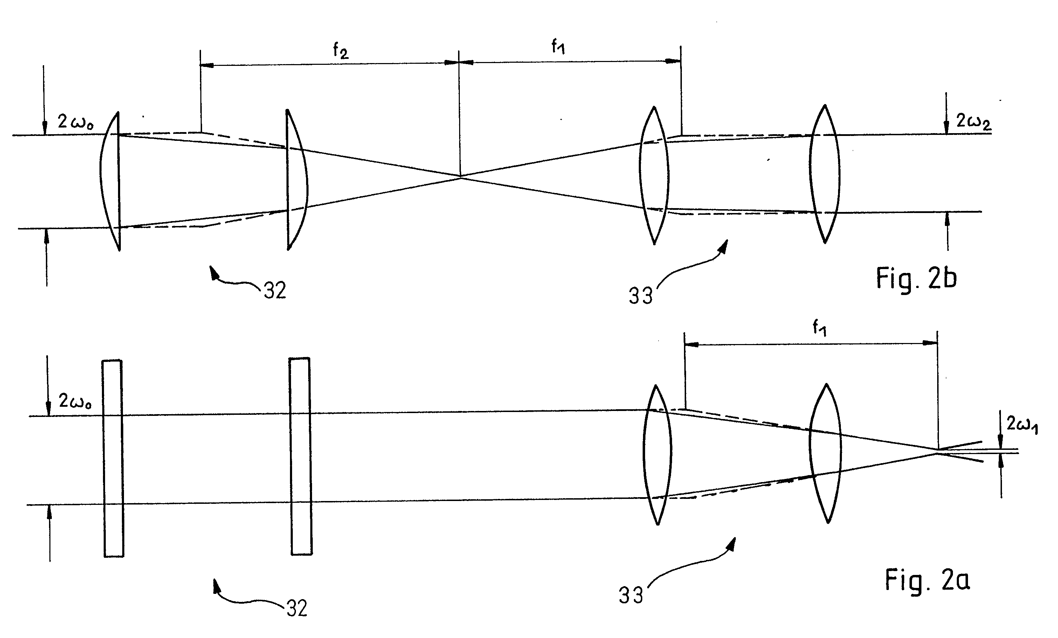

The optical system 3 for shaping the laser beams consists of a cylindrical zoom lens 31, of a spherical zoom lens 32, and of a diaphragm 33, which are lined up on the common optical axis A one after the other. A ray trajectory through lenses 31, 32 is shown in Figs. 2a, b in the optical axis section across and at right angle to generatrices of cylinder of the lens 21 and will be explained in more detail below. The lens 32 is provided with a mechanism 46 for its focusing. The focal length of the lens 31 is between 5 mm and 50 mm and that of the lens 32 between 5 mm and 100 mm.

In a displacement unit 6 a motor 63 produces a constant velocity movement of a carriage 61 along a precision rail 62. The carriage 61 is mounted on the rail 62 so that the displacement vector of the carriage 61 remains always in a plane parallel to the plane surface 64 of the carriage 61. To this surface 64 a workpiece 5 in the form of a stripe or a plate is fastened. The carriage 61 is positioned with respect to the optical system 3 so that the free surface of the workpiece 5 is placed in the focal plane of a spherical zoom lens 32. The control input of the motor 63 is connected to the second output of the microcomputer 8 controlling the turn-on and the turn-off of the motor 63 at the beginning and at the end, respectively, of the raster ruling or the turn-off during the ruling of a marking line when a defect has appeared.

A reversing prism 73 in an optical system 72 of a displacement measuring interferometer 7 is fastened to the carriage 61. The optical axis $A''$ of the optical system 72 is parallel to the rail 62, i.e. it is situated in the displacement direction of the carriage 61. A temperature probe 74, which is connected to the parametric input of a pick-up head 71 of the interferometer 7, is mounted on the carriage 61 as well. The output of the pick-up head 71 is connected to the first input of the microcomputer 8 recording the position of the workpiece 5. On the first output of the microcomputer 8, which is connected to the trigger input of the pulsed laser 1, there appears a trigger pulse when the workpiece 5 is in the positions predetermined by a programme.

The apparatus of the invention is provided with a controlling-autofocusing system 4 comprising the laser 41, the beam splitter 42, a cylindrical lens 43, a quadrant photodiode 44, a control circuit 45 and a focusing mechanism 46. A part of the slightly divergent light beam from the laser 41, which is reflected from the surface 64 of the workpiece 5, is reflected by the beam splitter 42 in the direction of an optical axis $A'$. On the optical axis $A'$ behind the beam splitter 42 the lens 43 and the photodiode 44 are placed one after the other. A photodiode 44 is connected to the input of the circuit 45, whose first output is connected to the control input of the mechanism 46. The second output of the circuit 45 is connected to the second input of the microcomputer 8; it has to control the actual appearance of a raster marking line.

The raster ruling apparatus of the invention functions as follows.

The light beam B of lasers 41, 1 is expanded or contracted in the telescope 21 to a cross-section $2w_0$ of the entrance pupil of the optical system 3, then it is adjusted roughly by the filter 22 and finely adjusted by the attenuator 23 to an appropriate laser pulse energy. This energy should be such that the dimensions of the raster marking lines are reproducible in spite of several per cent of stochastic variations of the laser pulse energy.

The width $2w_1$ of the raster marking line is set by adjusting the focal length $f_1$ of the spherical zoom lens 32 (Fig. 2); the half-width of the marking line is determined by $w_1 = \lambda f_1/\pi w_0$, where $\lambda$ is the wavelength of the pulsed laser 1. By the lens 32 having the numerical aperture $2w_0/f_1$ between 0.65 and 0.025, the width $2w_1$ between $2\mu m$ and $50 \mu m$ is feasible, e.g. with a Nd-YAG laser.

Consequently the length $2w_2$ of the raster marking line is set by adjusting the focal length $f_2$ of the cylindrical zoom lens 31; the half-length of the marking line is determined by $w_2 = w_0 \, f_1/f_2$.

With appropriate lenses 31, 32 a length of the marking lines between 0.50 mm and 10 mm can be obtained; the largest obtainable lengths depend on the disposable laser pulse energy as well.

The aperture of the diaphragm 33 is adjusted to the length of the raster marking line so that the diaphragm cuts off the wings of the laser light beam, in which wings the energy density exceeds the threshold energy density for ruling a marking line. Therefore all marking lines are of equal length and they are all bordered in the same way.

Since the focal range of the optical system 3 is from several micrometers at a high numerical aperture of the lens 32 to 50 $\mu m$ at a small numerical aperture, the controlling-autofocusing system 4 provides for the free surface of the workpiece 5 not leaving the focal plane of the lens 32 for a distance greater than the mentioned focal range. The slightly divergent beam of the laser 41 reflected from the free surface of the workpiece 5 is reflected in the beam splitter 42 and is through the cylindrical lens 43 incident on the quadrant photodiode 44. The photodiode 44 is placed so that a difference of signals from adjacent quadrants is minimal in an absolute sense when the workpiece 5 is positioned correctly. The focusing mechanism 46 of the lens 32 is controlled by the output signal of the photodiode 44 by means of the circuit 45. The focusing of the lens 32 is fast enough to currently compensate the departures of the free surface of the workpiece 5, which departures are within the tolerance limit of 10.0 $\mu m$. The controlling-autofocusing system 4 renders possible the reproducibility of the dimensions and of the uniform thickness of the raster marking lines within the preset tolerance.

The controlling-autofocusing system 4 also currently checks whether a raster marking line has actually been ruled. The raster marking line appears in a surface area, which has been illuminated by the laser light pulse causing a thin material layer on the workpiece surface to melt and evaporate. In this area the workpiece reflectivity is decreased, which is detected by a decrease of the sum of the signals from all quadrants of the photodiode 44. If a raster marking line has not been ruled, the signal sum does not decrease, whereof the microcomputer 8 is monitored by the circuit 45. In this case either the microcomputer 8 repeatedly triggers the laser 1 or the ruling is stopped and the workpiece is ejected.

The workpiece 5 is firmly fastened to the polished flat surface 64 of the carriage 61. The carriage displacement and thereby the position of the workpiece 5 is continuously determined by the displacement measuring interferometer 7. An accuracy of the displacement measurement to about 0.5 $\mu m/m$ is feasible. The data of the displacement of the workpiece 5 are transmitted to the microcomputer 8, wherein these data are corrected for temperature dilatations using the temperature value measured by the temperature probe 74. The laser 1 is triggered by the microcomputer 8, when each programmed position of the workpiece 5 is attained.

Thus the apparatus of the invention renders possible the ruling of a raster with a high accuracy of the programmed position of its marking lines. With the Nd-YAG laser as the laser 1 ($\lambda$ = 1.06 $\mu$m) a raster resolution of 2 $\mu$m and the marking lines length of about 10 mm are feasible. At the marking line length of 5 mm and at the interspace of 5 $\mu$m between to adjacent marking lines, the production rate of the raster is about 1 cm/s and the absolute accuracy is about 0.50 $\mu$m/m.

Reference signs in the claims are intended for better understanding and shall not limit the scope.

## Claims

1. A raster ruling apparatus, characterized in *that* a continuously pumped laser (41), a pulsed laser (1), a beam expanding and attenuating optical system (2) for expanding beams of the lasers (41, 1) and for attenuating the beam of the laser (1), a beam splitter (42) for splitting the beam of the laser (41), and an optical system (3) for shaping the laser beams are lined up on a common optical axis (A) one after the other,
*that* the plane surface (64) of a carriage (61), which is driven by a motor (63) along a rail (62) parallel to the surface (64), is placed near to and parallelly to the focal plane of a spherical zoom lens (32) of the optical system (3),
*that* a reversing prism (73) of a displacement measuring interferometer (7), whose optical axis (A$''$) is parallel to the rail (62), and a temperature probe (74) are mounted on the carriage (61)
*and that* a microcomputer (8) is connected through its first input to the output of the pick-up head (71) of the interferometer (7), the parametric input of the head (71) being connected to the temperature probe (74), and the microcomputer (8) is connected through its second input to the second output of a control circuit (45) and is connected through its first output to the trigger input of the pulsed laser (1) and is connected through its second output to the control input of the motor (63).

2. The apparatus as in claim 1, characterized in *that* in the beam expanding and attenuating optical system (2) a telescope (21), an absorbing filter (22) and an adjustable attenuator (23) are lined up on the common optical axis (A) one after the other.

3. The apparatus as in claim 2, characterized in *that* in the optical system (3) for shaping the laser beams a cylindrical zoom lens (31), a spherical zoom lens (32) and a diaphragm (33) are lined up on the common optical axis (A) one after the other.

4. The apparatus as in claim 3, characterized in *that* the control circuit (45) is connected through its first output to the control input of a focusing mechanism (46) of the lens (32) and is connected through its input to the output of the quadrant photodiode (44), which is placed in the focal plane of a cylindrical lens (43) placed on an optical axis (A$'$) originating from the beam splitter (42).

Fig. 1

Fig. 2b

Fig. 2a

EP 0 368 309 A2